Europäisches Patentamt

European Patent Office

Office européen des brevets

(11) Veröffentlichungsnummer: **0 268 972**

**A2**

# (12) EUROPÄISCHE PATENTANMELDUNG

(21) Anmeldenummer: 87116914.0

(22) Anmeldetag: 17.11.87

(51) Int. Cl.⁴: **H04B 9/00** , **H04B 14/02**

(30) Priorität: 22.11.86 DE 3640003

(43) Veröffentlichungstag der Anmeldung:
01.06.88 Patentblatt 88/22

(84) Benannte Vertragsstaaten:
**BE CH DE FR GB IT LI SE**

(71) Anmelder: **Moeller automation GmbH**
**Siemenacker 26-28**
**D-5303 Bornheim 2(DE)**

(72) Erfinder: **Krotz-Vogel, Werner**
**Weserstrasse 13**
**D-5303 Bornheim 2(DE)**
Erfinder: **Gillwald, Udo**
**Schützenstrasse 42**
**D-5303 Bornheim 3(DE)**

(54) **Verfahren und Vorrichtung zur Informationsübertragung, insbesondere für mobile Informationsträgersystem.**

(57) Es handelt sich um ein Verfahren zur Informationsübertragung, das insbesondere für mobile Informationsträgersysteme bestimmt ist, die im wesentlichen aus einer oder mehreren festpositionierten Schreib-Lese-Systemeinheiten mit Infrarot-Schreib-Lesekopf, aus einer mikroprozessorgesteuerten Schnittstelleneinheit, die es erlaubt, externe Kommunikationseinrichtungen an das gesamte System anzukoppeln, und aus einem oder mehreren mobilen Informationsträger-Bausteinen bestehen. Die Informationsübertragung erfolgt zwischen festpositionierter Schreib-Lese-Systemeinheit und mobilem Informationsträger(n) durch ein Infrarot-Impuls-Lage-Modulationsverfahren, wobei der Informationsträger die Kommunikation zur Schreib-Lese-Systemeinheit über mindestens zwei Fenster aufnimmt, die am Informationsträger an benachbarten Seiten eines Gehäuses über Eck angeordnet sind. Das infrarote Impuls-Lage-Modulationsverfahren ermöglicht eine Informationsübertragung, die berührungslos, das heißt verschleißfrei stattfindet, und die mit einem Minimum an Versorgungsenergie zu betreiben ist, da nur zeitlich kurze Lichtimpulse in Form von Lichtblitzen erzeugt werden, die als Markierung zeitlicher Lagen dienen, wobei der Inhalt der Information selbst aus dem zeitlichen Abstand der Infrarotimpulse erkannt wird.

FIG.1a

## Verfahren und Vorrichtung zur Informationsübertragung, insbesondere für mobile Informationsträgersysteme

Die Erfindung betrifft ein Verfahren zur Informationsübertragung nach dem Oberbegriff des Anspruches 1 und bezieht sich ferner auf eine Vorrichtung zum Durchführen dieses Verfahrens, insbesondere für mobile Informationsträgersysteme.

Stand der Technik:

Zur Informationsübertragung, insbesondere bei mobilen Informationsträgersystemen stehen derzeit folgende Verfahren zur Verfügung:

-mechanische Übertragung,
-statische induktive Kopplung,
-Kopplung durch elektromagnetisches Wechselfeld (HF),
-Kopplung durch elektromagnetisches Wechselfeld (Mikrowelle),
-Übertragung im Infrarotbereich und
-optische Übertragung im sichtbaren Bereich.

Die Nachteile einer mechanischen Kopplung ergeben sich aus dem hohen mechanischen Aufwand, der getrieben werden muß, um auch bei einer größeren Menge von Informationen für jedes Bit einen Speichermechanismus sowie einen Lese- und Schreibmechanismus aufzubauen, dem notwendigerweise großen Platzbedarf bei kleinen Einbautoleranzen und dem Verschleiß, da keine berührungslose Kopplung möglich ist.

Die Nachteile der elektromagnetischen Kopplung durch ein statisches oder ein Wechselfeld liegen in dem großen elektronischen Aufwand, um jeweils die Übertragungsleistung, die Richtcharakteristik, den Frequenzbereich und das Modulationsverfahren zu ermöglichen. Nachteilig ist auch der hohe Energieverbrauch zur elektromagnetischen Kopplung durch ein Wechselfeld, was insbesondere bei mobilen, berührungslos arbeitenden Informationsträgern problematisch ist, sowie die Begrenzung der Datenübertragungsgeschwindigkeit einerseits durch den notwendigen, aus Gründen der Störsicherheit möglichst großen Abstand der Modulationsrate gegenüber einer Trägerfrequenz und andererseits durch die Integrationseigenschaften der verwendeten Spulen, Schwingkreise oder Filter.

Die Nachteile der bisherigen optischen Übertragungsarten im sichtbaren oder infraroten Bereich sind die geringe Übertragungssicherheit bei Störsignalen, wie Untergrundrauschen, Impulsspitzen und dergleichen, die lange Zeit, die bei herkömmlichen Modulationsverfahren benötigt wird, um sicherzustellen, daß die Datenübertragung beider Teilnehmer, die in einem mobilen System asynchron aufeinandertreffen, synchron und fehlerfrei stattfindet, was eine niedrige effektive Datenrate bewirkt, und der hohe Energiebedarf, insbesondere bei Pegel-oder Trägermodulation.

Der Erfindung liegt die Aufgabe zugrunde, ein Verfahren zur Informationsübertragung, das insbesondere für mobile Informationsträgersysteme nach dem Oberbegriff des Anspruches 1 geeignet ist, zu schaffen, durch das die Schwierigkeiten beim Stande der Technik mit einem vergleichsweise geringen technischen Aufwand in besonders einfacher und zulässiger Weise beseitigt werden.

Diese Aufgabe wird erfindungsgemäß durch die Merkmale des Verfahrensanspruches 1 gelöst, während in den Ansprüchen 2 bis 7 besonders vorteilhafte Weiterbildungen des erfindungsgemäßen Verfahrens gekennzeichnet sind und die Ansprüche 8 bis 10 eine Vorrichtung zum Durchführen eines solchen Verfahrens zur Informationsübertragung betreffen.

Durch das erfindungsgemäße Verfahren ergeben sich folgende Vorteile:

Das infrarote Impuls-Lage-Modulationsverfahren ermöglicht eine Informationsübertragung, die berührungslos, das heißt verschleißfrei stattfindet, und die mit einem Minimum an Versorgungsenergie zu betreiben ist, da nur zeitlich kurze Lichtimpulse erzeugt werden (Lichtblitze), die als Markierung zeitlicher Lagen dienen, wobei der Inhalt der Information selbst aus dem zeitlichen Abstand der Infrarotimpulse erkannt wird. Das erfindungsgemäße Verfahren arbeitet außerdem besonders störsicher, da die kurzen Lichtimpulse wegen ihres großen Signal-Rauschabstandes sehr gut gegenüber einem störenden Untergrund zu detektieren sind, und da die Übertragung eines jeden Bits in direkter zeitlich synchroner Folge mit seinem komplementären Prüfbit und deren ausschließliche Detektierung innerhalb definierter Zeitintervalle eine größtmögliche Sicherheit gegenüber Stör-und Fehlimpulsen bietet. Es wird auch eine höhere effektive Informationsübertragungsrate erzielt, da das Synchronisationselement der Impuls-Lage-Modulation zeit lich kürzer und eindeutig unterscheidbar von der Übertragung eines Datenbits ist, insbesondere kann die Informationsübertragung zu jedem Zeitpunkt abgebrochen oder unterbrochen und danach sofort neu synchronisiert werden.

Die Kommunikationsmöglichkeit über mindestens zwei Fenster zu einer Schreib-Lese-Systemeinheit ermöglicht flexiblere Einsatzmöglichkeiten, da ein derartiger Informationsträger mit Kopplung im infraroten oder sichtbaren Bereich mehrere Möglichkeiten der Lage oder Orientierung in Einbau oder Bewegung einnehmen kann.

Weitere Einzelheiten und Vorteile der Erfindung ergeben sich aus der folgenden Beschreibung eines in der Zeichnung schematisch dargestellten bevorzugten Ausführungsbeispiels. Es zeigen

Fig. 1a ein schematisches Blockbild der einzelnen Komponenten eines mobilen Informationsträgersystems nach der Erfindung,

Fig. 1b ein Blockbild der für ein solches System erforderlichen Einrichtungen für die Programmierung der zur Verwendung kommenden Informationsträger,

Fig. 2 ein Detailbild eines Datenwortausschnittes mit Auswertung der Impuls-Lage-Modulation bei einem solchen System,

Fig. 3 ein Detailbild eines Datenwortes wie in Fig. 2, das die unterschiedliche Lage der Impulse für die Wertigkeit der Bitinformationen in dem erfindungsgemäßen Verfahren verdeutlicht,

Fig. 4 einen vergrößerten Datenwortausschnitt mit Darstellung der Fehlimpulsausblendung in einem solchen Verfahren und

Fig. 5 eine schematische Darstellung einer Vorrichtung nach der Erfindung, bei der der Informationsträger mindestens zwei Fenster für die Kommunikation mit der Schreib-Lese-Systemeinheit aufweist.

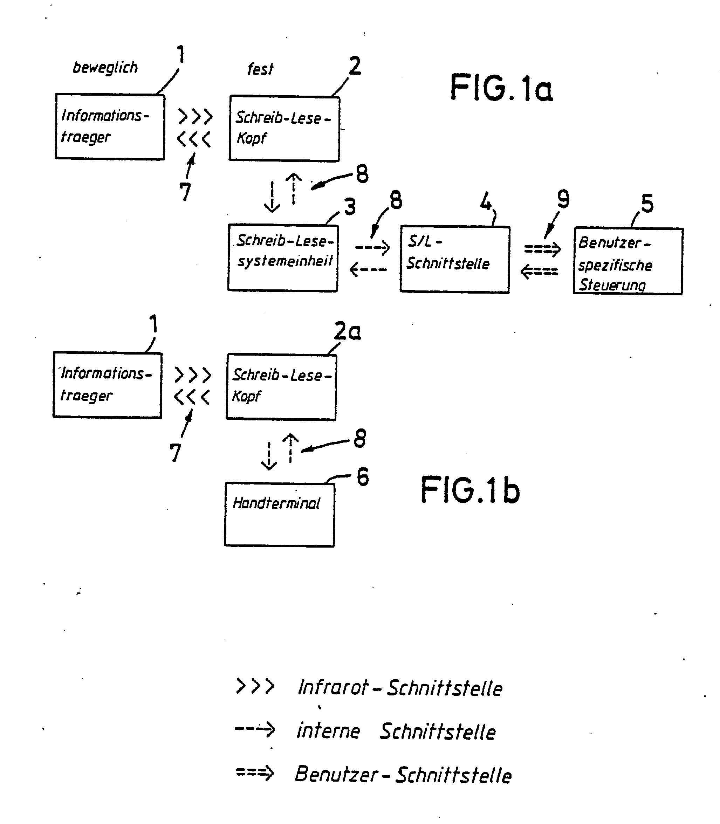

Wie in Fig. 1a im einzelnen zu erkennen ist, besteht das erfindungsgemäße Informationsträgersystem einerseits aus iinem beweglichen bzw. mobilen Informationsträger 1 und andererseits aus der festen Anordung eines Schreib-Lesekopfes 2 und einer Schreib-Lese-Systemeinheit 3, die über eine Schreib-Lese-Schnittstelle 4 mit einer benutzerspezifischen Steuerung 5 verbunden ist.

Bei der in Fig. 1b gezeigten Anordnung handelt es sich um den beweglichen Informationsträger 1 und um einen festpositionierten Schreib-Lesekopf 2a, der mit einem Handterminal 6 verbunden ist. Mit "7" sind die Infrarot-Schnittstellen des Systems, mit "8" die internen Schnittstellen und mit "9" die Benutzer-Schnittstelle bezeichnet.

Die Informationsübertragung zwischen dem beweglichen Informationsträger 1 und dem festpositionierten Schreib-Lesekopf 2 erfolgt bidirektional durch ein Infrarot-Impuls-Lage-Modulationsverfahren über eine Infrarot-Schnittstelle 7, wobei der Informationsträger 1 die Kommunikation zur Schreib-Lese-Systemeinheit 3 über mindestens zwei Fenster aufnehmen kann.

Wie in Fig. 1a und Fig. 1b zu erkennen ist, ist zwischen dem Schreib-Lesekopf 2 bzw. 2a einerseits und der Schreib-Lese-Systemeinheit 3 andererseits bzw. zu dem Handterminal 6 hin jeweils eine interne Schnittstelle 8 vorgesehen, die ebenso wie die Benutzer-Schnittstelle 9 zwischen der Schreib-Lese-Schnittstelle 4 und der benutzerspezifischen Steuerung 5 beide bidirektional ausgebildet sind.

Der bewegliche Informationsträger 1 (Fig. 5) befindet sich in einem geschlossenen Gehäuse 10. Durch je ein in einem Winkel von 90° zur Stirnseite und zur Längsseite des Gehäuses 10 angeordnetes Fenster 11, 12 kann mit Infrarot-Sende-Empfangsbausteinen entsprechend dem Schema von Fig. 1a Kommunikation mit der Schreib-Lese-Systemeinheit 3 aufgenommen werden. Das Gehäuse 10 für den Informationsträger 1 ist so konzipiert, daß auch die Integrierung eines dritten, gegenüber den beiden Fenstern 11, 12 räumlich um 90° versetzten Fensters 13 in die Ober-oder Unterseite des Gehäuses 10 möglich ist.

Die Kommunikation mit dem beweglichen Informationsträger 1 muß von mindestens zwei Seiten möglich sein. Angewählt ist jeweils die Seite, auf der die Koimunikation von außen begonnen wurde, wobei die Übertragung von Informationen bitseriell im Impuls-Lage-Modulationsverfahren erfolgt.

Der festpositionierte Schreib-Lesekopf 2 ist ein Peripheriebaustein des Mikroprozessorsystems der Systemeinheit. Er bildet das Gegenstück des beweglichen Informationsträgers 1 für die Infrarotschnittstelle 7.

Das Handterminal 6 ist ein integriertes Mikroprozessorsystem mit Tastatur, LCD-oder LED-Anzeige und Anschlui für einen Schreib-Lesekopf bzw. einer Testmöglichkeit für einen Schreib-Lesekopf 2a.

Das Handterminal 6 entspricht einem Komplettgerät aus Systemeinheit und Benutzerschnittstelle des Informationsträgersystems, das den wahlweisen Zugriff auf den beweglichen Informationsträger über Tastatur und Anzeige ermöglicht.

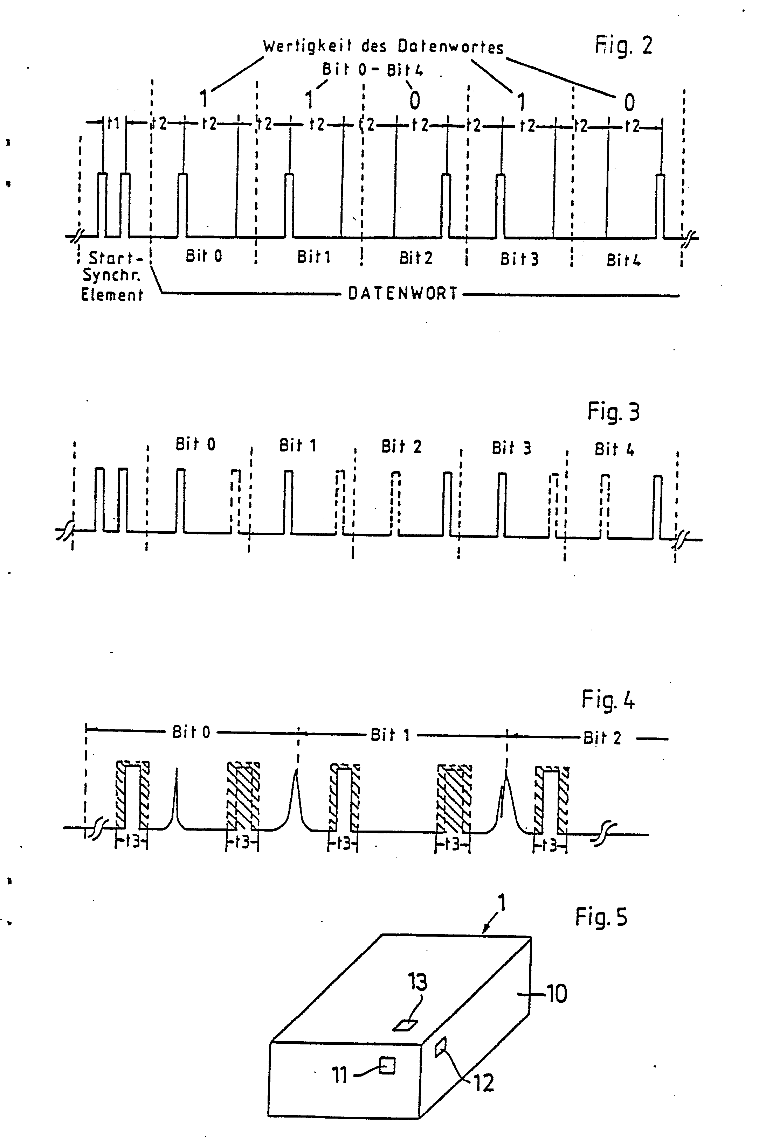

Fig. 2 zeigt das Detailbild einer Information mit einem beispielhaften Datenwortausschnitt nach dem erfindungsgemäßen Infrarot-Impuls-Lage-Modulationsverfahren, wobei die ersten fünf Bit "Bit 0" bis "Bit 4" des Datenwortes dargestellt sind. Verdeutlicht wird hierbei, daß die zu übertragende Information aus zwei Teilen besteht. Das Start-und Synchronisationselement liegt iimer am Anfang der Informationsimpulsfolge.

Der zeitliche Abstand "t1" in dem Start-bzw. Synchronisationselement ist immer gleich und wesentlich geringer als der Impulsabstand "t2" im darauffolgenden Datenwort. Das Start-bzw. Synchronisationselement ist asynchron, während die Impulsfolge "t2" im Datenwort bezogen auf das Start-bzw. Synchronisationselement ein völlig synchrones Verhalten aufweist. Das Datenwort ist Träger des Inhaltes der Information. Jedem Bit in dem Datenwort steht ein zeitgleiches Rasterfeld zur Verfügung, aus dem durch die Lage des Impulses in dem Raster die Wertigkeit der Bitinformation erkannt wird. Der zeitliche Abstand vom letzten Impuls des Start-bzw. Synchronisationselementes bis zum Impuls der ersten Bitinformation ist für die Wertigkeit "1" 1 $\times$ t2 und für die Wertigkeit "$\phi$" 2 $\times$ t2. Der minimale Impulsabstand 1 $\times$ t2 im Datenwort liegt wie im Beispiel der Fig. 2 zwischen "Bit 2" mit der Wertigkeit "$\phi$" und "Bit 3" mit der Wertigkeit "1".

Der maximale zeitliche Abstand 3 $\times$ t2 ist zwischen "Bit 1" mit der Wertigkeit "1" und "Bit 2" mit der Wertigkeit "$\phi$". Gleiches gilt für "Bit 3" und "Bit 4".

Bei zwei nebeneinanderliegenden Bits mit gleicher Wertigkeit beträgt der zeitliche Abstand 2 $\times$ t2 wie zwischen "Bit 0" und "Bit 1".

In Fig. 3 wird verdeutlicht, daß pro Raster und pro Bit nur ein Impuls detektiert wird. Die Impulse mit Vollinie geben den ersten fünf Bits die gleiche Wertigkeit wie in Fig. 2. Die Impulse mit gestrichelter Linie stellen die komplementäre Wertigkeit dieser Bitinformationen dar.

Einen beispielhaften vergrößerten Datenwortausschnitt zeigt Fig. 4. Innerhalb der zeitgleichen Raster für jede Bitinformation befinden sich im zeitgleichen Abstand zwei zeitgleiche Intervalle "t3". Nur in diesen Intervallen "t3" werden Impulse dedektiert. Dazwischenliegende Stör-oder Fehlerimpulse werden somit ausgeblendet.

## Ansprüche

1. Verfahren zur Informationsübertragung, insbesondere für mobile Informationsträgersysteme, die im wesentlichen aus einer oder mehreren festpositionierten Schreib-Lese-Systemeinheiten mit Infrarot-Schreib-Lesekopf, aus einer mikroprozessorgesteuerten Schnittstelleneinheit, die es erlaubt, externe Kommunikationseinrichtungen an das gesamte System anzukoppeln, und aus einem oder mehreren mobilen Informationsträger-Bausteinen bestehen, **dadurch gekennzeichnet,** daß die Informationsübertragung zwischen festpositionierter Schreib-Lese-Systemeinheit (3) und mobilem Informationsträger (n) (2, 2a) durch ein Infrarot-Impuls-Lage-Modulationsverfahren erfolgt, wobei der Informationsträger (1) die Kommunikation zur Schreib-Lese-Systemeinheit (3) über mindestens zwei Fenster (11, 12) aufnimmt.

Verfahren zur Informationsübertragung nach Anspruch 1, **dadurch gekennzeichnet,** daß der Inhalt einer Information aus dem zeitlichen Abstand bzw. der Lage der Infrarotimpulse in einem feststehenden Raster erkannt wird.

3. Verfahren zur Informationsübertragung nach den Ansprüchen 1 und 2, **dadurch gekennzeichnet,** daß die Infrarotimpulse in dem feststehenden Raster aus in einem gleichen zeitlichen Abstand aufeinanderfolgenden zeitgleichen Intervallen detektiert werden.

4. Verfahren zur Informationsübertragung nach den Ansprüchen 1 bis 3, **dadurch gekennzeichnet,** daß das Raster aus einer geradzahligen Anzahl von Intervallen besteht, denen, zu Zweiergruppen zusammengefaßt, je eine Bitinformation zugeordnet ist, wobei dem ersten Intervall immer die binäre Wertigkeit "EINS" und dem zweiten Intervall immer die binäre Wertigkeit "NULL" gegeben ist.

5. Verfahren zur Informationsübertragung nach den Ansprüchen 1 bis 4, **dadurch gekennzeichnet,** daß Stör-und Fehlimpulse außerhalb der Intervalle des Rasters nicht detektiert werden.

6. Verfahren zur Informationsübertragung nach den Ansprüchen 1 bis 5, **dadurch gekennzeichnet,** daß die Schnittstelleneinheit sowie der Informationsträger (1) einen Mikroprozessor beinhalten, der die Durchführung spezieller Kommunikationsprotokolle erlaubt.

7. Verfahren zur Informationsübertragung nach den Ansprüchen 1 bis 6, **dadurch gekennzeichnet,** daß der Informationsträger (1) der Schreib-Lese-Systemeinheit (3) seine Kommunikationsbereitschaft durch periodisches Aussenden eines Synchronisationswortes angezeigt, und daß damit die Schreib-Lese-Systemeinheit (3) über den Zustand des Informationsträgers (1) bezüglich des Datenspeichers informiert wird.

8. Vorrichtung zum Durchführen des Verfahrens zur Informationsübertragung nach einem oder mehreren der Ansprüche 1 bis 10 mit einer festpositionierten Schreib-Lese-Systemeinheit (3) und mindestens einem mobilen Informationsträger (1), **dadurch gekennzeichnet,** daß der Informationsträger (1) mindestens zwei Fenster (11, 12) für die Kommunikation mit der Schreib-Lese-Station (2, 3) aufweist.

9. Vorrichtung nach Anspruch 8, **dadurch gekennzeichnet,** daß die Fenster (11, 12) am Informationsträger (1) an benachbarten Seiten eines Gehäuses (10) vorzugsweise in einem Winkel von 90° über Eck angeordnet sind.

10. Vorrichtung nach Anspruch 8 oder 9, **dadurch gekennzeichnet,** daß der Informationsträger (1) drei Fenster (11, 12, 13) an räumlich jeweils um 90° gegeneinander versetzten Seiten seines Gehäuses (10) aufweist.

**FIG.1a**

beweglich — 1
fest — 2

| Informations-traeger (1) | >>> / <<< (7) | Schreib-Lese-Kopf (2) |

8

| Schreib-Lese-systemeinheit (3) | ---> / <--- (8) | S/L-Schnittstelle (4) | ===> / <=== (9) | Benutzer-spezifische Steuerung (5) |

**FIG.1b**

| Informations-traeger (1) | >>> / <<< (7) | Schreib-Lese-Kopf (2a) |

8

| Handterminal (6) |

>>>    Infrarot - Schnittstelle

--->    interne Schnittstelle

===>    Benutzer - Schnittstelle

0 268 972

Wertigkeit des Datenwortes
Bit 0 - Bit 4

Fig. 2

t1 t2 t2 t2 t2 t2 t2 t2 t2 t2 t2

Start-
Synchr.
Element

Bit 0  Bit 1  Bit 2  Bit 3  Bit 4

——————— DATENWORT ———————

Fig. 3

Bit 0  Bit 1  Bit 2  Bit 3  Bit 4

Fig. 4

———— Bit 0 ————  ———— Bit 1 ————  —— Bit 2 ——

t3  t3  t3  t3  t3

Fig. 5

1

13

10

11  12